Europäisches Patentamt

European Patent Office

Office européen des brevets

(19)

(11) Veröffentlichungsnummer: **0 026 315**
**B1**

(12) EUROPÄISCHE PATENTSCHRIFT

(45) Veröffentlichungstag der Patentschrift:
08.12.82

(51) Int. Cl.³: **B 60 C 9/00**, B 60 C 9/22,
B 60 C 9/02, B 29 H 17/14

(21) Anmeldenummer: 80104891.9

(22) Anmeldetag: 16.08.80

(54) Wickelreifen.

(30) Priorität: 29.08.79 DE 2934936

(43) Veröffentlichungstag der Anmeldung:
08.04.81 Patentblatt 81/14

(45) Bekanntmachung des Hinweises auf die Patenterteilung:
08.12.82 Patentblatt 82/49

(84) Benannte Vertragsstaaten:
AT BE CH DE FR GB IT LI LU NL SE

(56) Entgegenhaltungen:
DE-A-1 505 875
DE-A-1 729 737
DE-A-2 107 817
DE-A-2 110 145
DE-A-2 557 613
DE-B-1 262 580
FR-E-89 054
US-A-4 053 342

(73) Patentinhaber: BAYER AG, Zentralbereich Patente,
Marken und Lizenzen, D-5090 Leverkusen 1, Bayerwerk
(DE)

(72) Erfinder: Ippen, Jakob, Dr., Schleiermacher Strasse 17,
D-5090 Leverkusen 1 (DE)
Erfinder: Stüttgen, Friedel, Albrecht-Dürer-Strasse 94,
D-5024 Pulheim (DE)

## Wickelreifen

Die Erfindung betrifft einen Reifen, bestehend aus luftdichter Innenplatte, Karkasse, Drahtkappe, Humpstreifen, Gürtel, Lauffläche, Schulterteil, Drahtkern und Seitenteil, wobei eine Gummiplatte und ein in eine Gummimischung eingebettetes Karkassengewebe übereinanderliegend im Verband zu mindestens zwei Wicklungen gewickelt sind.

Der gebräuchliche Kraftfahrzeugreifen wird heute noch aus sehr vielen, einlagigen Bauteilen weitgehend in Handkonfektion hergestellt.

Die Qualität des Reifens hängt insbesondere von der Fingerfertigkeit und Sorgfalt des Reifenbauers ab. Folglich liegt bei diesen hoch beanspruchten Fahrzeugteilen ein nicht kalkulierbares Risiko vor, welches wegen der Gefahr für Leib und Leben sehr schwerwiegend ist. Außerdem ist durch die Handarbeit der Personalaufwand sehr groß, wodurch hohe Kosten verursacht werden.

Es hat nicht an Versuchen gefehlt, diese Arbeit zu mechanisieren; so wurde z. B. in einer druckschriftlichen Vorveröffentlichung für einen Diagonalreifen vorgeschlagen, einen Verband aus zwei Lagen spiralförmig zu wickeln.

In der Praxis wurde dieses Verfahren nie angewandt, weil die übliche luftundurchlässige Innenplatte beispielsweise aus Butyl-Kautschuk den hohen mechanischen Belastungen zwischen zwei Karkassenlagen nicht gewachsen ist und weil im Übergangsbereich zur Seitenwand Separationen eintraten. Schwierig ist weiter bei Diagonalstreifen der Stoßbereich, da einerseits die Verstärkungsanlagen entlang der diagonalen Fadenrichtung geschnitten werden müssen und andererseits die Fäden der einzelnen Lagen sich unter einem bestimmten Winkel kreuzen, so daß zwangsweise dort ungünstige Zipfel entstehen.

Aufgabe der Erfindung ist es, einen Reifen für ein Kraftfahrzeug zu finden, der weniger Arbeitsgänge erfordert, eine höhere Mechanisierung (Automation) erlaubt und trotzdem hohen Ansprüchen an Fahrkomfort, Dauerfestigkeit und Fahrstabilität gerecht wird.

Die Aufgabe wird erfindungsgemäß dadurch gelöst, daß die auf ihrer ganzen Länge der Karkasse sich erstreckende, luftundurchlässige Gummiplatte, die eine Dichtigkeit bei 80°C von 22 bis $42 \times 10^{-8}$ Liter pro 24 Stunden und m$^2$, vorzugsweise von 30 bis $35 \times 10^{-8}$ Liter pro 24 Stunden und m$^2$, besitzt, axial mindestens 10 bis 20 mm über die Karkassenlage übersteht und als mindestens zweimal umlaufende Gürtelwicklungen ein in hochmodulhaltiger Mischung aus 100 Gewichtsteilen Kautschuk mit 20 bis 40 Gewichtsteilen Verstärkerharz eingebetteter Gürtelverband vorhanden ist, dessen textile Fäden pro Gürtelverband zur Laufrichtung und zum anderen Gürtelverband einen bestimmten Winkel bilden.

Für den Fachmann ist es überraschend, daß bei einer mit luftdichter Innenplatte über die ganze Länge beschichteten Karkasse trotz mehrfach umlaufender Wicklung der Aufbau im Dichtbereich auch bei starker Beanspruchung unter mechanischen und thermischen Einflüssen nicht zerstört wird, wie es von den bisher verwendeten Innenplatten bekannt war. Gleichzeitig wird das Vorurteil überwunden, daß bei einer Innenplatte mit geringer Dichtigkeit Luft hindurchwandert, die dann infolge der Walkarbeit während des Fahrens zur Bildung von Lufteinschlüssen und damit zur Zerstörung des Reifens führt.

Im Gegensatz zur üblichen stufenweisen Verbreiterung der Einzellagen, die jeweils immer nur die Wicklung einer Lage erlaubt, wird überraschenderweise beim Überstehen beider Innenplatten eine einwandfreie Einbettung der Karkassenränder erreicht und damit ein genügend großer Schutz gegen Zerstörung dieser gefährdeten Stellen erzielt.

Als weiterer Vorteil ist zu nennen, daß die zur Laufrichtung schrägen, mindestens in Rechts- bzw. Linkslage zweimal umlaufenden textilen Fäden in Verbindung mit der hochmodulhaltigen (d. h. bei 100% Dehnung Zugfestigkeit $\geq 6$ MPa) Mischung dem Reifen alle Fahrzeigenschaften verleihen, die heute an das Massenprodukt »Reifen« gestellt werden.

Die hochmodulhaltigen Mischungen zeichnen sich dadurch aus, daß sie über hohe Härtegrade (Shore A 85 bis 95) verfügen und einen Spannungswert besitzen, der bei 100% Dehnung eine Zugfestigkeit von 6 bis 15 MPa besitzt. Weiter lassen sie sich gut verarbeiten.

Geeignete Kautschuke zur Herstellung der hochmodulhaltigen Mischung sind Natur- und Synthesekautschuk und deren Gemische. Besonders geeignete Synthesekautschuke sind Styrol-Butadien-Kautschuk und Butadienkautschuk wie z. B. cis-1.4-Polybutadien. Außerdem sind Urethan- bzw. Harnstoffgruppen enthaltende Kautschuke geeignet.

Die hochmodulhaltige Mischung wird aus Kautschuk-Mischungen erhalten, die neben den üblichen Vulkanisationsmitteln, Beschleunigern, Alterungsschutzmitteln und Füllstoffen, auf 100 Gew.-Teile Kautschuk jeweils 20−40, vorzugsweise 25−35 Gew.-Teile Kieselsäure und Verstärkerharz enthalten. Geeignete Verstärkerharze sind beispielsweise Novolake auf phenolischer Basis, wie z. B. Phenol-Formaldehydharze, die auch in Form ihrer gemäß DE-A-2 557 613 erhältlichen Umsetzungsprodukte mit Borsäure, Bortrioxid oder Borsäurealkylester sowie ungesättigten Fettsäuren eingesetzt werden können. Vorzugsweise werden als Verstärkerharze Novolake eingesetzt, die durch übliche Zusätze wie z. B. Cashew-Öl modifiziert sind. Es ist auch möglich, anstelle des Verstärkerharzes oder zusammen mit diesem Glasfasern einzusetzen.

Die mehrfache Wicklung mit einer Bahn aus zwei Lagen reduziert die Anzahl der Arbeitsgänge und ist wegen der exakten Führung durchaus automatisierbar.

Weiter ist die Zahl der Ansatzpunkte verringert, so daß hierdurch weniger Schwachstellen vorhanden sind, wodurch die Sicherheit des Reifens erhöht wird. Die textilen Fäden sind preiswerter und besitzen gegenüber einem herkömmlichen Stahlgürtel geringeres Gewicht, was bei schnell rotierenden Rädern von Vorteil ist.

In einer besonderen Ausführung liegen Anfang und Ende des Karkassengewebes annähernd übereinander.

Ein Versatz der Enden des Karkassengewebes, der in Umfangsrichtung zwischen minus 5 und plus 10 mm zur Paßlage beider Enden übereinander betragen darf, wirkt sich nicht ungünstig auf die Rundlauf- und Festigkeitseigenschaften aus. Durch diese möglichen Toleranzen wird die schwierige Fertigung mit dem plastisch-elastischen Produkt wesentlich erleichtert.

In einer anderen Ausführungsform enthält die luftundurchlässige Mischung neben üblichen Kautschuk-Mischungen auf 100 Gew.-Teile Kautschuk 5−15 Gew.-Teile Kieselsäure und 0,5−4 Gew.-Teile Haftvermittler-Kombination, insbesondere aus Resorcin und Stearinsäure im Verhältnis 2 : 1.

Geeignete Kautschuke zur Herstellung der luftundurchlässigen Mischung sind Natur- und Synthesekautschuke und deren Gemische. Besonders geeignete Synthesekautschuke sind Styrol-Butadien-Kautschuk und Butadienkautschuk, wie z. B. cis-1.4-Polybutadien.

Die luftundurchlässige Mischung wird aus üblichen Kautschuk-Mischungen hergestellt, die neben den bekannten Vulkanisationsmitteln, Beschleunigern und Alterungsschutzmitteln auf 100 Gew.-Teile Kautschuk beispielsweise noch folgende Bestandteile enthalten: 30−50 Gew.-Teile Ruß, 5−15 Gew.-Teile Kieselsäure und 0,5−4 Gew.-Teile einer Haftvermittlerkombination, z. B. aus Resorcin und Stearinsäure im Verhältnis 2 : 1.

In einer möglichen Ausführungsform sind im Gürtel zusätzlich zwei Stahlgürtellagen angeordnet, die ein- oder beidseitig mit hochmodulhaltiger Mischung abgedeckt sind.

Bei Schwerlast-Reifen werden durch den Einbau von zusätzlichen Stahlgürtellagen mit ober- bzw. unterhalb angeordneten Lagen aus hochmodulhaltiger Mischung die erforderlichen Eigenschaften eines Schwerlaststreifens erreicht, wobei durch die geringe Anzahl der Stahlgürtel der Reifen billiger und wirtschaftlicher wird.

Ausführungsbeispiele der Erfindung sind in der Zeichnung dargestellt und werden im folgenden näher beschrieben. Es zeigt

Fig. 1 Schnitt durch PKW-Reifen,
Fig. 2 Schnitt durch PKW-Reifen,
Fig. 3 Schnitt durch PKW-Reifen,
Fig. 4 Schnitt durch LKW-Reifen.

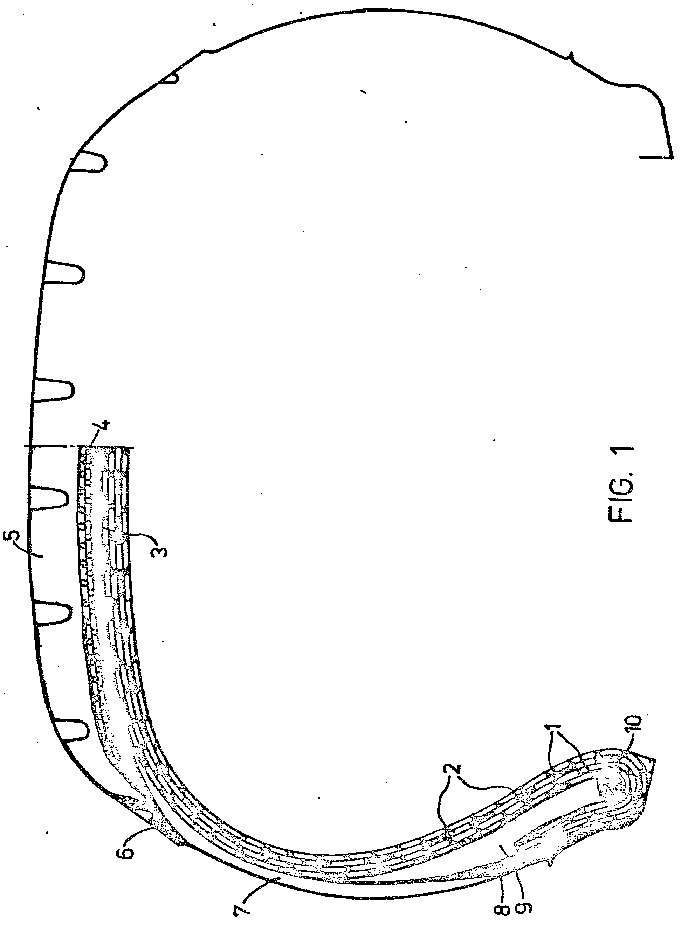

In Fig. 1 bedeuten: Luftdichte Gummiplatte 1, Karkasse 2, hochmodulhaltige Gummimischung 3, zweifach umlaufender Gürtel 4, Lauffläche 5, Schulterteil 6, Seitenteil 7, Humpstreifen 8, Drahtkappe 9 und Stahlseilkern 10.

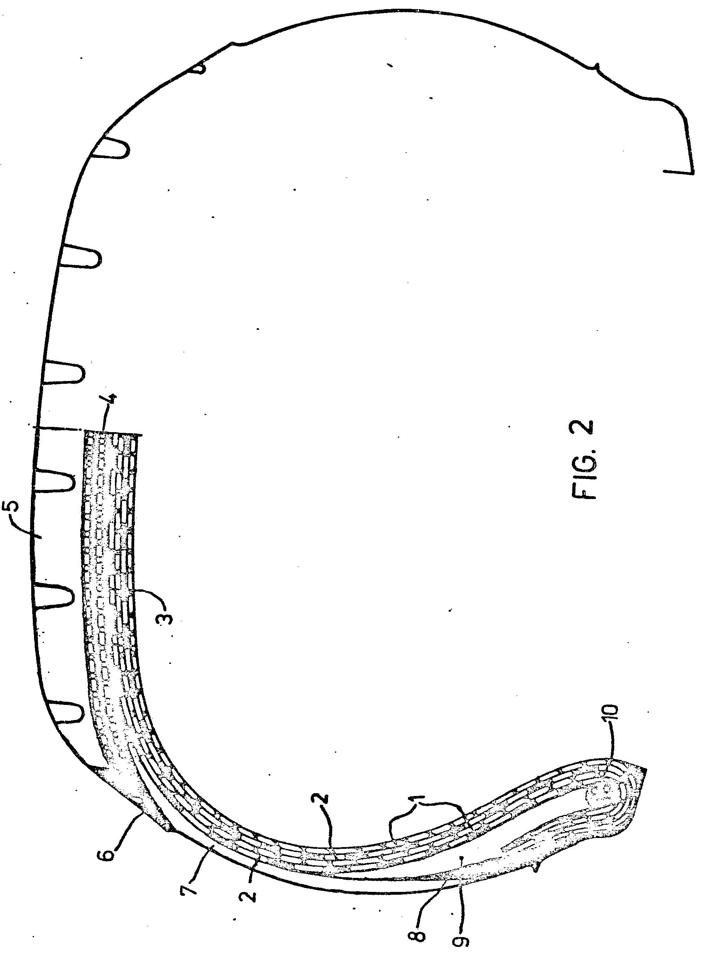

In Fig. 2 bedeuten: Luftdichte Gummiplatte 1, Karkasse 2, hochmodulhaltige Gummimischung 3, umlaufender Gürtel 4, Lauffläche 5, Schulterteil 6, Seitenteil 7, Humpstreifen 8, Drahtkappe 9 und Stahlseilkern 10.

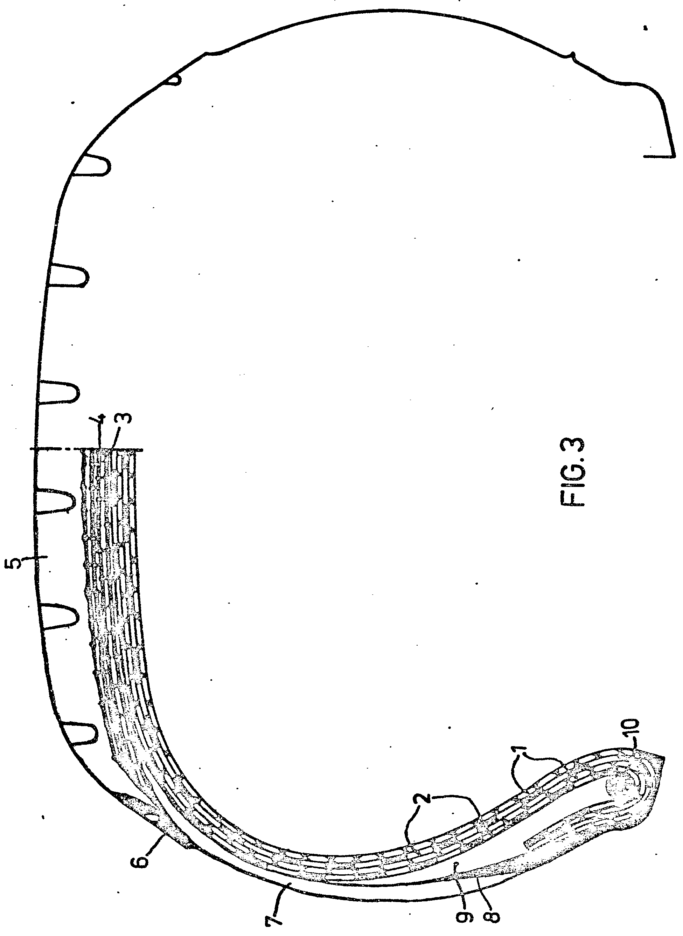

In Fig. 3 bedeuten: Luftdichte Gummiplatte 1, Karkasse 2, zweifach gewickelter Gürtel 4 mit hochmodulhaltiger Mischung 3 sowie Steigungswinkel rechts, zweifach gewickelter Gürtel 4 mit hochmodulhaltiger Mischung 3 sowie Steigungswinkel links, Lauffläche 5, Schulterteil 6, Seitenteil 7, Humpstreifen 8, Drahtkappe 9, Drahtkern 10.

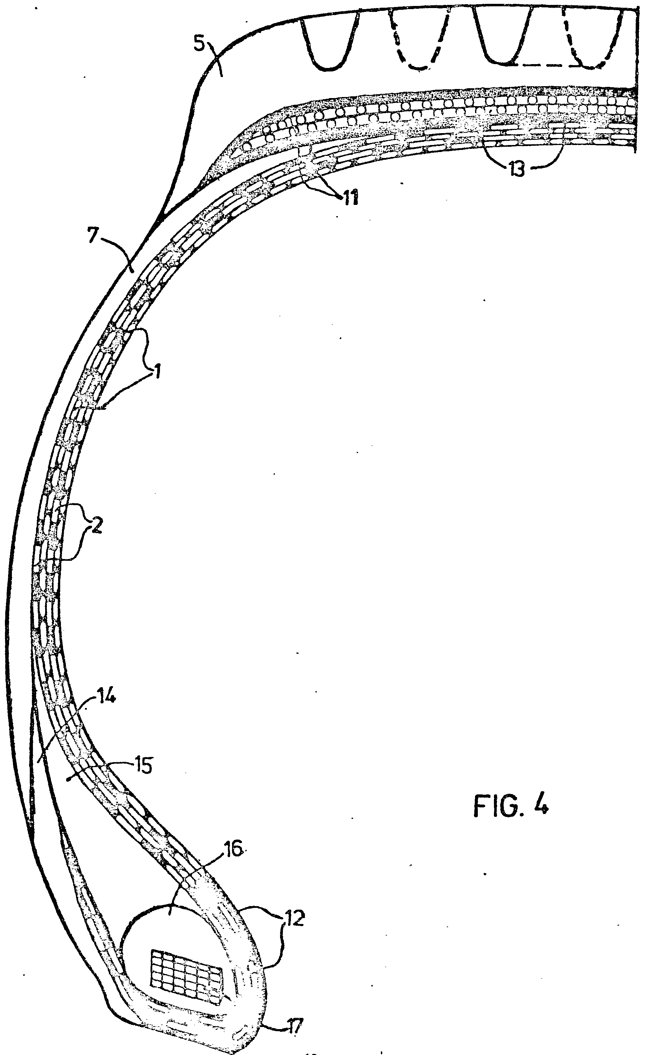

In Fig. 4 bedeuten: Gummiplatte 1, Karkasse 2, hochmodulhaltige Mischung 3 im Gürtelbereich, hochmodulhaltige Mischung 11 im Fußstreifen 12, Stahlgürtel 13 mit Steigungswinkel rechts, Stahlgürtel 13 mit Steigungswinkel links, Lauffläche 5, Seitenteil 7, Humpstreifen 14 aus hochmodulhaltiger Mischung 11, Drahtkappe 15 aus hochmodulhaltiger Mischung 12, Stahldrahtkern 16, Stahlkernumhüllung 17 aus hochmodulhaltiger Mischung 11.

### Beispiele

Gute Ergebnisse zeigten folgende Rezepturen:
Eine luftdichte Innenplatte ist charakterisiert durch

|  | Gew.-Teile |
|---|---|
| Naturkautschuk | 80,0 |
| cis-1.4-Polybutadien | 20,0 |
| Ruß N-539 | 40,0 |
| aktive, gefällte Kieselsäure | 8,0 |
| Zinkoxid | 10,0 |
| Mineralöl, aromatisch | 3,0 |
| Alkylphenol-Harz | 2,0 |
| N-Isopropyl-N-phenyl-p-phenylendiamin | 1,8 |
| 2,2,4-Trimethyl-1,2-dihydrochinolin | 1,2 |
| Stearinsäure | 0,75 |
| Resorcin/Stearinsäure 2 : 1 | 1,2 |
| Hexamethylentetramin | 0,75 |
| Benzothiazyl-2-cyclohexylsulfenamid | 0,7 |
| Dibenzothiazyldisulfid | 0,3 |
| Schwefelbatch (53,2%) | 6,25 |
|  | 175,95 |

| Mischungsplastizität/80° C | |
|---|---|
| Defo-Härte/Defo-Elastizität | 475/14 |
| Zugfestigkeit (MPa) | 20,3 |
| Bruchdehnung (%) | 460 |
| Spannungswert bei 300% Dehnung (MPa) | 11,7 |
| Weiterreißfestigkeit nach Pohle (N) | 250 |
| Härte bei 20/70° C (Shore A) | 60/60 |
| Stoßelastizität bei 20/70° C (%) | 64/70 |
| Gasdurchlässigkeit bei 80° C | $32,2 \cdot 10^{-8}$ |

Eine hochmodulhaltige Mischung zeichnet sich durch die nachstehenden Werte aus:

| | |
|---|---|
| Naturkautschuk | 75,0 |
| cis-1,4-Polybutadien | 25,0 |
| Ruß N-347 | 40,0 |
| aktive, gefällte Kieselsäure | 30,0 |
| modifizierter Novolak | 30,0 |
| Stearinsäure | 3,0 |
| N-Isopropyl-N-phenyl-p-phenylendiamin | 2,5 |
| 2,2,4-Trimethyl-1,2-dihydro-chinolin | 1,5 |
| Zinkoxid | 5,0 |
| sekundäres Amin | 2,5 |
| Hexamethylentetramin (80%) | 4,5 |
| Benzothiazyl-2-cyclohexyl-sulfenamid | 1,5 |
| Schwefelbatch (53,2%) | 7,5 |
| | 227,5 |

| | |
|---|---|
| Mischungsplastizität/80° C | |
| Defo-Härte/Defo-Elastizität | 2250/11 |
| Zugfestigkeit (MPa) | 14,1 |
| Bruchdehnung (%) | 270 |
| Spannungswert bei 100% | |
| Dehnung (MPa) | 6,5 |
| Weiterreißfestigkeit nach | |
| Pohle (N) | 180 |
| Härte bei 20° C (Shore A) | 89 |

### Patentansprüche

1. Reifen, bestehend aus luftdichter Innenplatte (1), Karkasse (2), Drahtkappe (9; 15), Humpstreifen (8; 14), Gürtel (4; 13), Lauffläche (5), Schulterteil (6), Drahtkern (10; 16) und Seitenteil (7), wobei

a) eine Gummiplatte (1) und ein in eine Gummimischung eingebettetes Karkassengewebe (2) übereinanderliegend im Verband zu mindestens zwei Wicklungen gewickelt sind,

b) die auf ihrer ganzen Länge der Karkasse (2) sich erstreckende, luftundurchlässige Gummiplatte (1), die eine Dichtigkeit bei 80° C von 22 bis $42 \times 10^{-8}$ Liter pro 24 Stunden und $m^2$, vorzugsweise von 30 bis $35 \times 10^{-8}$ Liter pro 24 Stunden und $m^2$, besitzt, axial mindestens 10 bis 20 mm über die Karkassenlage übersteht und

c) als mindestens zweimal umlaufende Gürtelwicklungen ein in hochmodulhaltiger Mischung (3) aus 100 Gewichtsteilen Kautschuk mit 20 bis 40 Gewichtsteilen Verstärkerharz eingebetteter Gürtelverband (4) vorhanden ist, dessen textile Fäden pro Gürtelverband zur Laufrichtung und zum anderen Gürtelverband (4) einen bestimmten Winkel bilden.

2. Reifen nach Anspruch 1, dadurch gekennzeichnet, daß Anfang und Ende des Karkassengewebes (2) annähernd übereinander liegen.

3. Reifen nach Anspruch 1 bis 2, dadurch gekennzeichnet, daß die luftundurchlässige Mischung neben üblichen Kautschuk-Mischungen auf 100 Gew.-Teile Kautschuk 5—15 Gew.-Teile Kieselsäure und 0,5—4 Gew.-Teile Haftvermittler-Kombination, insbesondere aus Resorcin und Stearinsäure im Verhältnis 2 : 1 enthält.

4. Reifen nach Anspruch 1 bis 3, dadurch gekennzeichnet, daß im Gürtel (4) zusätzlich zwei Stahlgürtellagen (13) angeordnet sind, die ein oder beidseitig mit hochmodulhaltiger Mischung (3) abgedeckt sind.

### Claims

1. A tyre consisting of an air-tight int nal panel (1), casing (2), wire cap (9, 15), hump strip (8, 14), belt (4, 13), tread (5), shoulder portion (6), wire core (10, 16) and lateral portion (7), wherein

a) a rubber panel (1) and a casing fabric (2) embedded in a rubber mixture which lie on top of each other in the assembly are wound into at least two coils,

b) the air-tight rubber panel (1) extending over its entire length of the casing (2) and having a density at 80° C of from 22 to $42 \times 10^{-8}$ litres per 24 hours and $m^2$, preferably from 30 to $35 \times 10^{-8}$ litres per 24 hours and $m^2$, projects at least 10 to 20 mm axially over the casing layer, and

c) a belt assembly (4) embedded in high modulus-possessing mixture (3) composed of 100 parts by weight of rubber with 20 to 40 parts by weight of reinforcing resin is provided as at least doubly encircling belt coils, the textile threads thereof forming a specific angle to the direction of travel and to the other belt assembly (4) for each belt assembly.

2. A tyre according to claim 1, characterised in that the beginning and the end of the casing fabric (2) lie approximately on top of each other.

3. A tyre according to claims 1 to 2, characterised in that the air-tight mixture contains, in addition to conventional rubber mixtures, from 5 to 15 parts by weight of silica and from 0.5 to 4 parts by weight of adhesive combination, composed in particular of resorcinol and stearic acid, in a ratio of 2 : 1, per 100 parts by weight of rubber.

4. A tyre according to claims 1 to 3, characterised in that two steel belt layers (13) are additionally arranged in the belt (4) and are covered on one or both sides with high modulus-possessing mixture (3).

### Revendications

1. Pneu, comportant une plaque intérieure (1) étanche à l'air, une carcasse (2), des recouvrements en fil (9; 15), des bandes de baloche (8; 14), une ceinture (4; 13), une bande de roulement (5), des épaules (6), des tringles (10; 16) et des flancs (7), dans lequel

a) une plaque de gomme (1) et un tissu de carcasse (2) enrobé d'un mélange de gommes sont enroulés comme un ensemble en étant disposés l'un sur l'autre en au moins deux enroulements,

b) la plaque de gomme (1) imperméable à l'air, s'étendant sur toute la longueur de la carcasse (2) et ayant une étanchéité à 80°C de 22 à 42 × 10$^{-8}$ litre par 24 heures et par m$^2$, de préférence de 30 à 35 × 10$^{-8}$ litre par 24 heures et par m$^2$, dépasse axialement d'au moins 10 à 20 mm de la nappe de carcasse, et

c) dans lequel est présent, sous forme d'enroulements de ceinture faisant au moins deux tours, un ensemble de ceinture (4) qui est enrobé d'un mélange (3) à haut module de 100 parties en poids de caoutchouc et de 20 à 40 parties en poids de résine de renforcement et dont les fils textiles forment un angle déterminé avec la direction de roulement dans chaque ensemble de ceinture et avec l'autre ensemble de ceinture (4).

2. Pneu selon la revendication 1, caractérisé en ce que le début et la fin du tissu de carcasse (2) sont disposés à peu près l'un sur l'autre.

3. Pneu selon la revendication 1 ou 2, caractérisé en ce que le mélange imperméable à l'air contient, outre des mélanges habituels de caoutchouc, pour 100 parties en poids de caoutchouc, 5 à 15 parties en poids d'acide silicique et 0,5 à 4 parties en poids d'un composé d'accrochage, en particulier de résorcinol et d'acide stéarique selon le rapport 2 : 1.

4. Pneu selon l'une des revendications 1 à 4, caractérisé en ce que la ceinture (4) contient en plus deux nappes de ceinture d'acier (13) qui sont recouvertes d'un côté ou des deux côtés d'un mélange (3) à haut module.

FIG. 1

FIG. 2

0 026 315

FIG. 3

FIG. 4